# EUROPÄISCHE PATENTSCHRIFT

(11) **EP 2 616 274 B1**
(45) Veröffentlichungstag und Bekanntmachung des Hinweises auf die Patenterteilung: **12.07.2017**
(21) Anmeldenummer: 11723251.2
(22) Anmeldetag: 17.05.2011
(51) Int. Cl.: B60P 1/16, B60P 3/12, B60T 7/12, B60T 13/26, B66F 17/00

(54) **VERFAHREN, SYSTEM UND STEUERUNGSEINRICHTUNG ZUR STEUERUNG EINER DRUCKLUFTGESTEUERTEN BREMSANLAGE**
METHOD, SYSTEM AND CONTROL DEVICE FOR CONTROLLING A COMPRESSED-AIR-CONTROLLED BRAKE SYSTEM
PROCÉDÉ, SYSTÈME ET DISPOSITIF DE COMMANDE PERMETTANT DE COMMANDER UN SYSTÈME DE FREINAGE À COMMANDE PNEUMATIQUE

(30) Priorität: 26.02.2011 DE 102011012561; 17.09.2010 DE 102010045655
(43) Veröffentlichungstag der Anmeldung: 24.07.2013
(73) Patentinhaber: WABCO GmbH, 30453 Hannover (DE)
(72) Erfinder: BARLSEN, Holger, 30851 Langenhagen (DE); RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2011/002425
(87) Internationale Veröffentlichungsnummer: WO 2012/034608

(56) Entgegenhaltungen:
- WO-A1-01/94151
- WO-A1-89/05248
- CA-A1- 2 566 766
- DE-A1- 3 022 152
- DE-A1- 4 342 732
- DE-A1- 19 904 216
- KR-B1- 100 682 397
- RU-C1- 2 028 219
- US-A- 4 207 958
- US-A1- 2005 093 366
- US-A1- 2007 102 997
- US-B1- 6 450 587

## Beschreibung

Die Erfindung betrifft ein Verfahren zur Steuerung einer druckluftgesteuerten Bremsanlage eines Nutzfahrzeuges. Die Erfindung betrifft außerdem ein System aus einer Bremsanlagen-Steuerungseinrichtung für eine solche Bremsanlage und einem Überwachungssensor sowie eine Bremsanlagen-Steuerungseinrichtung dafür.

Im Straßenverkehr sollen Fahrzeugzustände vermieden werden, die eine Gefahr für Personen und Gegenstände bedeuten. Eine mögliche Gefahrenquelle ist eine ungesicherte oder schlecht gesicherte Ladung eines Fahrzeugs. Im Bereich von Nutzfahrzeugen, d.h. Lastkraftwagen und Anhängern, sind zur Ladungssicherung daher besondere Sicherungs- und insbesondere Verriegelungsmechanismen vorgesehen. Allerdings besteht das Risiko, dass der entsprechende Verriegelungsmechanismus nicht oder nicht richtig eingesetzt wird und in solchen Fällen die Fahrzeugladung unzureichend gesichert ist. Dies ist beispielsweise der Fall, wenn ein auf einer Ladefläche des Nutzfahrzeuges befindlicher Rollcontainer nicht ordnungsgemäß verriegelt ist. Bei Kipperfahrzeugen ergibt sich ein Risiko, wenn das Kipperfahrzeug mit gehobener Kippmulde fährt.

Auch in anderen Fällen können im Straßenverkehr unsichere Fahrzustände auftreten, wenn bestimmte Fahrzeugteile nicht wie vorgesehen positioniert sind. Als Beispiel hierfür sei eine geöffnete Tankklappe genannt. Bei Containerfahrgestellen besteht das Risiko, dass versehentlich mit ausgezogenem Fahrgestell gefahren wird. Bei Fahrgestellen mit integrierter Hebebühne kommt es vor, dass unbeabsichtigt mit angehobener Hebebühne gefahren wird.

DE 43 42 732 A1 offenbart ein Tankfahrzeug mit einer Zugmaschine und einem Tankauflieger, der gelenkig an der Zugmaschine befestigt ist und Sensoren zur Überwachung der Kippneigung des Tankaufliegers sowie eine Signaleinrichtung, die im Wahrnehmungsbereich des Fahrers angeordnet ist, aufweist. Die Sensoren sind mit einer zugeordneten Auswertungsschaltung wirksam verbunden. Auf diese Weise kann noch im sicheren Fahrzustand des Tankfahrzeugs die Annäherung an instabile Fahrzustände erkannt, bzw. festgestellt werden. Diese Feststellungen über eine potenzielle Kippgefahr des Tankaufliegers können dazu verwendet werden den Fahrer des Tankfahrzeugs zu informieren und zu warnen. Alternativ dazu kann eine automatische Drosselung der Fahrgeschwindigkeit des Tankfarzeuges über das Antriebs- und/oder über das Bremssystem erfolgen. Gegebenenfalls können beide alternativen Maßnahmen gleichzeitig ergriffen werden.

RU 2 028 219 C1 offenbart eine Sicherheitseinrichtung für ein Kippfahrzeug mit einem Rheostat, das zwischen dem Chassis und dem Fahrzeugaufbau angeordnet ist und die Bremsen betätigt, wenn der Aufbau gekippt ist.

Der Erfindung liegt daher die Aufgabe zugrunde, Gefahren im Straßenverkehr, die z.B. aufgrund nicht ausreichender Sicherung der Ladung oder nicht korrekter Positionierung von Fahrzeugteilen auftreten können, zu minimieren. Der Erfindung liegt außerdem die Aufgabe zugrunde, mit einfachen Mitteln eine Möglichkeit zu schaffen, den Fahrer des Fahrzeugs auf solche Fahrzustände aufmerksam zu machen, d. h. den Fahrer auf besondere Situationen aufmerksam zu machen.

Diese Aufgabe wird durch die in den Ansprüchen 1, 2, 11 und 13 und 15 angegebene Erfindung gelöst. Die Unteransprüche geben vorteilhafte Ausgestaltungen der Erfindung an.

Die Erfindung hat den Vorteil, durch eine vollautomatische Funktion des Fahrzeugs, die in einer Steuerungseinrichtung für eine Bremsanlage integriert ist, einen potentiell oder aktuell unsicheren Fahrzustand infolge nicht ordnungsgemäßer Sicherung oder Positionierung zu erkennen und das Fahrzeug daraufhin einzubremsen, um so auf einen sicheren Zustand hinzuwirken und mögliche Gefahren durch die mangelnde Sicherung des Fahrzeugteils bzw. der Ladung zu minimieren. Als Fahrzustand wird - im Gegensatz zum Stillstand - der Zustand des fahrenden Fahrzeugs verstanden. Die Erfindung kann allerdings auch bereits im Stillstand wirksam sein.

Das Einbremsen kann in Form leichter Bremsimpulse im Sinne eines Warnsignals für den Fahrer oder als echte Bremsung, die zu einer Verringerung der Fahrgeschwindigkeit führt, ausgeführt sein, oder als Kombination davon. Die Erfindung hat den Vorteil, mit nur geringem apparativem Aufwand und insbesondere ohne die Notwendigkeit eines Eingriffs durch einen menschlichen Bediener zu einer Verbesserung der Sicherheit im Straßenverkehr zu führen. Insbesondere sind keine separaten Ventile erforderlich, die von Hand gesteuert werden müssen, um die Bremse des Fahrzeuges zu aktivieren. Zur Realisierung der Erfindung ist eine Erweiterung einer Bremsanlagen-Steuerungseinrichtung, z. B. in Form einer Software-Erweiterung, und die Hinzufügung eines Überwachungssensors erforderlich, was bei einem vergleichsweise geringen Kostenaufwand eine deutliche Verbesserung der Sicherheit ermöglicht. In einigen Fällen sind derartige Sensoren sind bereits im Fahrzeug vorhanden, zum Beispiel bei Kippern in Form von Näherungsschaltern an der Kippmulde, die die abgesenkte Position der Kippmulde anzeigen. Im FahrzeugStillstand werden solche Sensoren verwendet, um beim Abkippen das Fahrgestell durch eine elektronische Luftfederung auf die Puffer absenken, das so genannte Entladeniveau.

Die Erfindung eignet sich grundsätzlich für alle Arten von Nutzfahrzeugen, insbesondere mit Motor angetriebene Fahrzeuge wie Lastkraftwagen mit Ladefläche und Kipper, und alle Arten von Anhängefahrzeugen, sowohl mit Ladefläche als auch mit Kippmulde. Dementsprechend seien als Nutzfahrzeug ein mit Motor angetriebenes Fahrzeug, ein Anhängefahrzeug oder ein aus einem mit Motor angetriebenen Fahrzeug und einem oder mehreren Anhängefahrzeugen gebildeter Fahrzeugzug verstanden. Der Ladungsträger zur Aufnahme einer Beladung kann beispielsweise als Container, der auf einer Ladefläche des Nutzfahrzeugs anzuordnen ist, oder als Kippmulde für Schüttgut ausgebildet sein.

Durch den Überwachungssensor kann ein Fahrzeugteil, eine Beladung des Nutzfahrzeugs oder ein Ladungsträger überwacht werden. Als Fahrzeugteil kommen sämtliche Fahrzeugteile in Frage, die einer besonderen Positionierung oder Sicherung bedürfen, wie z. B. ausziehbare Teile von Containerfahrgestellen, eine Tankklappe, eine am Fahrgestell angeordnete Hebebühne oder die bereits erwähnte Kippmulde.

Je nach Art des Nutzfahrzeugs kann der Überwachungssensor unterschiedlich ausgebildet sein. Sofern ein Verriegelungsmechanismus zur Ladungssicherung vorgesehen ist, wie z.B. bei Rollcontainern oder Kippmulden mit Verriegelung, kann der Überwachungssensor vorteilhaft eingerichtet sein, die für einen sicheren Fahrzustand des Nutzfahrzeugs vorgeschriebene ordnungsgemäße Verriegelung des eine Beladung des Nutzfahrzeugs aufnehmenden Ladungsträgers mit dem Nutzfahrzeug zu überwachen. In manchen Anwendungsfällen ist keine Verrieglung notwendig, wie z.B. bei bestimmten Kipperfahrzeugen, bei denen die Kippmulde bereits durch ihr Eigengewicht gehalten wird. Für solche Fälle kann der Überwachungssensor vorteilhaft eingerichtet sein, die für einen sicheren Fahrzustand des Nutzfahrzeugs vorgeschriebene ordnungsgemäße Positionierung des eine Beladung des Nutzfahrzeugs aufnehmenden Ladungsträgers mit dem Nutzfahrzeug zu überwachen. Vorteilhaft ist auch, den Überwachungssensor derart auszubilden, dass sowohl die ordnungsgemäße Positionierung als auch die ordnungsgemäße Verriegelung überwacht wird.

Dementsprechend kann der Überwachungssensor als Verrieglungssensor oder als Positionierungssensor oder als kombinierter Verrieglungs-/Positionierungssensor ausgebildet sein. Gemäß einer vorteilhaften Weiterbildung der Erfindung ist der Überwachungssensor im oder am Nutzfahrzeug angeordnet.

Der Überwachungssensor kann z. B. ein mechanischer Schalter sein, ein induktiver Näherungsschalter, ein Drucksensor oder ein optischer Sensor, wie z. B. eine Lichtschranke. Der Überwachungssensor kann entweder direkt über eine elektrische Leitung mit einer Steuerungseinrichtung verbunden sein, oder über eine drahtlose Datenübertragungsstrecke oder ein Fahrzeug-Bussystem, wie z. B. einen CAN-Bus. Der Überwachungssensor kann auch Teil eines anderen Steuergeräts oder einer Steuereinrichtung im Nutzfahrzeug sein.

Gemäß einem weiteren Aspekt betrifft die Erfindung ein Verfahren zur Steuerung einer druckluftgesteuerten Bremsanlage eines Nutzfahrzeugs, wobei im Fahrzustand des Nutzfahrzeugs automatisch die Bremsen des Nutzfahrzeuges betätigt werden. Hierbei erfolgt wenigstens zu Beginn der automatischen Betätigung der Bremsen des Nutzfahrzeugs die Betätigung der Bremsen derart, dass diese Betätigung von dem Fahrer des Nutzfahrzeugs als Warnsignal wahrnehmbar ist, aber das fahrende Nutzfahrzeug nicht oder nur unwesentlich verzögert wird. Dies hat den Vorteil, dass nicht oder zumindest nicht sofort aktiv in das Fahrverhalten des Nutzfahrzeugs eingegriffen wird, sondern zunächst nur eine Warnung des Fahrers durch die Bremsenbetätigung erfolgt. Die automatische Betätigung der Bremsen kann hierbei grundsätzlich von jeder Art von Signal oder Betriebszustand des Fahrzeuges und insbesondere der Bremsanlagen-Steuerungseinrichtung ausgelöst werden. Da es sich nur um ein Warnsignal handelt, kann dieses im Prinzip jederzeit bei fahrendem Fahrzeug erzeugt werden, ohne dass dies negative Auswirkungen auf die Verkehrssicherheit hat. So kann das Warnsignal beispielsweise bei Erkennung einer übermäßigen Leckage der Druckluftanlage oder bei überhöhter Fahrgeschwindigkeit ausgelöst werden.

Gemäß einer vorteilhaften Weiterbildung der Erfindung erfolgt die Erzeugung des Warnsignals mittels der automatischen Betätigung der Bremsen des Nutzfahrzeugs in Folge der Erkennung durch den Überwachungssensor, dass die für einen sicheren Fahrzustand des Nutzfahrzeugs vorgesehene Sicherung oder Positionierung des Fahrzeugteils, der Beladung oder des Ladungsträgers nicht vorliegt.

Gemäß einer vorteilhaften Weiterbildung der Erfindung erfolgt wenigstens zu Beginn der automatischen Betätigung der Bremsen des Nutzfahrzeugs infolge der Erkennung von nicht ordnungsgemäßer Sicherung die Betätigung der Bremsen gepulst. Die gepulste Betätigung erfolgt derart, dass der Bremsdruck zwischen einem unteren Druckwert und einem oberen Druckwert hin- und her moduliert wird, wobei das fahrende Fahrzeug nicht oder nur unwesentlich verzögert wird. Eine solche gepulste Betätigung der Bremsen hat den Vorteil, dass ein von dem Fahrer des Nutzfahrzeugs deutlich erkennbares und leicht von anderen Fahrzeugbewegungen unterscheidbares Warnsignal erzeugt wird. Hierbei kann der untere Druckwert niedrig gewählt werden, z.B. null bar oder ein von Null verschiedener geringer Wert. Der untere Druckwert kann vorteilhaft im Bereich des Ansprechdrucks der Bremsen liegen, z. B. bei etwa 1,2 bar. Der obere Druckwert wird derart gewählt, dass durch die Bremsbetätigung ein von dem Fahrer spürbares "Rucken" im Fahrzeug erzeugt wird, das aber zu keiner nennenswerten Fahrzeugverzögerung führt. Der obere Druckwert kann beispielsweise im Bereich von 2,5 bar liegen. Die Frequenz der gepulsten Bremsenbetätigung kann vorteilhaft bei 1 Hz liegen.

Gemäß einer vorteilhaften Weiterbildung der Erfindung wird bei der automatischen Betätigung der Bremsen des Nutzfahrzeugs infolge der Erkennung von nicht ordnungsgemäßer Sicherung während eines ersten Zeitraums zu Beginn der automatischen Betätigung der Bremsen das fahrende Nutzfahrzeug durch die automatische Betätigung der Bremsen nicht oder nur unwesentlich verzögert und nach Ablauf des ersten Zeitraums das fahrende Nutzfahrzeug durch die automatische Betätigung der Bremsen wesentlich verzögert. Die Verzögerung des Nutzfahrzeugs nach Ablauf des ersten Zeitraums kann bis auf einen vorgegebenen Geschwindigkeitswert, d.h. eine begrenzte Fahrgeschwindigkeit, erfolgen oder bis zum Fahrzeugstillstand. Die Dauer des ersten Zeitraums kann z. B. 5 Sekunden betragen. Auf diese Weise kann eine zeitliche Staffelung zwischen dem Warnsignal, d.h. der geringfügigen Bremsenbetätigung, und der zur wesentlichen Fahrzeugverzögerung führenden Bremsbetätigung realisiert werden.

Grundsätzlich können die genannten Funktionen bereits im Stillstand des Nutzfahrzeuges wirksam sein. Gemäß einer vorteilhaften Weiterbildung der Erfindung wird die automatische Betätigung der Bremsen, durch die das fahrende Nutzfahrzeug nicht oder nur unwesentlich verzögert wird, bei einer Fahrgeschwindigkeit oberhalb einer ersten Mindestgeschwindigkeit ausgelöst. Dies hat den Vorteil, dass bei entsprechend geringeren Fahrgeschwindigkeiten, die unterhalb der ersten Mindestgeschwindigkeit liegen, ein Fahren mit nicht ordnungsgemäßer Sicherung nicht zum Auslösen einer automatischen Bremsung führt, so dass z. B. ein Kipper mit gehobener Kippmulde mit entsprechend geringer Fahrgeschwindigkeit, z. B. auf einer Baustelle, bewegt werden kann.

Gemäß einer vorteilhaften Weiterbildung der Erfindung wird die automatische Betätigung der Bremsen, durch die das fahrende Nutzfahrzeug wesentlich verzögert wird, bei einer Fahrgeschwindigkeit oberhalb einer zweiten Mindestgeschwindigkeit ausgelöst. Die zweite Mindestgeschwindigkeit ist größer als die erste Mindestgeschwindigkeit. Auf diese Weise kann alternativ oder zusätzlich zu der zuvor genannten zeitlichen Staffelung auch eine Staffelung hinsichtlich der Fahrgeschwindigkeit realisiert werden. Dies erlaubt eine weitgehende Flexibilität der Verwendung der Erfindung bei unterschiedlichen Nutzfahrzeugtypen und Einsatzgebieten.

Gemäß einer vorteilhaften Weiterbildung der Erfindung wird die automatische Betätigung der Bremsen des Nutzfahrzeuges infolge der Erkennung von nicht ordnungsgemäßer Sicherung bei einer Fahrgeschwindigkeit oberhalb einer dritten Mindestgeschwindigkeit unterdrückt. Die dritte Mindestgeschwindigkeit kann gemäß einer vorteilhaften Weiterbildung größer sein als die zweite Mindestgeschwindigkeit. Gemäß einer vorteilhaften Weiterbildung wird oberhalb der dritten Mindestgeschwindigkeit nur der Teil der automatischen Betätigung der Bremsen unterdrückt, durch den das Fahrzeug wesentlich verzögert wird. Das Warnsignal bleibt dabei erhalten. Hierdurch können mögliche unsichere Fahrzustände, die durch eine automatische Bremsenbetätigung bei höherer Geschwindigkeit eintreten können, vermieden werden.

Die erste Mindestgeschwindigkeit kann z. B. 10 km/h betragen, die zweite Mindestgeschwindigkeit z. B. 20 km/h und die dritte Mindestgeschwindigkeit z. B. 40 km/h. Gemäß einer vorteilhaften Weiterbildung der Erfindung sind die Werte für die ersten, die zweite und die dritte Mindestgeschwindigkeit, wie auch die Dauer des ersten Zeitraums, in einem Speicher der Bremsanlagen-Steuerungseinrichtung einspeicherbar und damit einstellbar.

Gemäß einer vorteilhaften Weiterbildung der Erfindung wird bei der automatischen Betätigung der Bremsen des Nutzfahrzeugs infolge der Erkennung von nicht ordnungsgemäßer Sicherung die Bremskraft mit einer Übergangsfunktion von einem Anfangswert auf einen Endwert erhöht, wobei der Endwert größer ist als der Anfangswert. Vorteilhaft wird die Übergangsfunktion derart ausgelegt, dass sich ein zeitlich relativ langsamer Übergang ergibt, der es dem Fahrer des Nutzfahrzeugs ermöglicht, durch eigene Bedienungseingriffe das Nutzfahrzeug in der gewünschten Weise abzubremsen. Die Übergangsfunktion kann z.B. eine Funktion mit linearer oder progressiver Charakteristik sein. Gemäß einer vorteilhaften Weiterbildung der Erfindung wird während der automatischen Betätigung der Bremsen des Nutzfahrzeugs infolge der Erkennung von nicht ordnungsgemäßer Sicherung überwacht, ob der Fahrer des Nutzfahrzeugs selbst eine Bremsbetätigung durchführt. Bei erkannter Bremsbetätigung durch den Fahrer wird die automatische Betätigung der Bremsen abgebrochen oder zumindest für einen gewissen Wartezeitraum unterbrochen. Dies erlaubt es dem Fahrer des Nutzfahrzeugs, z. B. bei erkanntem Warnsignal in eigener Regie das Nutzfahrzeug an der gewünschten Stelle zum Stillstand zu bringen.

Ein vorteilhaftes System gemäß der Erfindung weist eine Bremsanlagen-Steuerungseinrichtung für eine druckluftgesteuerte Bremsanlage eines Nutzfahrzeuges und einen Überwachungssensor auf, der dazu eingerichtet ist zu überwachen, ob die für einen sicheren Fahrzustand des Nutzfahrzeugs vorgesehene Sicherung oder Positionierung eines Fahrzeugteils des Nutzfahrzeugs, einer Beladung des Nutzfahrzeugs oder eines eine Beladung des Nutzfahrzeugs aufnehmenden Ladungsträgers vorliegt. Die Steuerungseinrichtung weist ein elektronisches Steuergerät auf, das mit einem Signaleingang mit dem Überwachungssensor verbunden ist. Das Steuergerät ist dazu eingerichtet, eine automatische Betätigung der Bremsen des Nutzfahrzeuges zu bewirken, wenn an dem Signaleingang ein Auslösesignal von dem Überwachungssensor empfangen wird, das anzeigt, dass die für einen sicheren Fahrzustand des Nutzfahrzeugs vorgesehene Sicherung oder Positionierung des Fahrzeugteils, der Beladung oder des Ladungsträgers nicht vorliegt.

Eine vorteilhafte Bremsanlagen-Steuerungseinrichtung für ein solches System weist das elektronische Steuergerät auf, das dazu eingerichtet ist, die automatische Betätigung der Bremsen des Nutzfahrzeuges zu bewirken, insbesondere wenn an dem Signaleingang das Auslösesignal von dem Überwachungssensor empfangen wird. Das elektronische Steuergerät ist zur Ausführung der zuvor genannten Verfahren eingerichtet, z. B. durch entsprechende Programmierung der Steuersoftware des elektronischen Steuergeräts.

Die Erfindung wird nachfolgend anhand von Ausführungsbeispielen unter Verwendung von Zeichnungen näher erläutert.

Es zeigen:
- Figur 1: - ein Nutzfahrzeug mit Ladefläche und
- Figuren 2 und 3: - ein Nutzfahrzeug mit Kippmulde und
- Figur 4: - ein System aus einer Bremsanlagen-Steuerungseinrichtung und einem Überwachungssensor und
- Figur 5: - Zeitverläufe des Signals des Überwachungssensors und des Bremsdrucks.

In den Figuren werden gleiche Bezugszeichen für einander entsprechende Elemente verwendet.

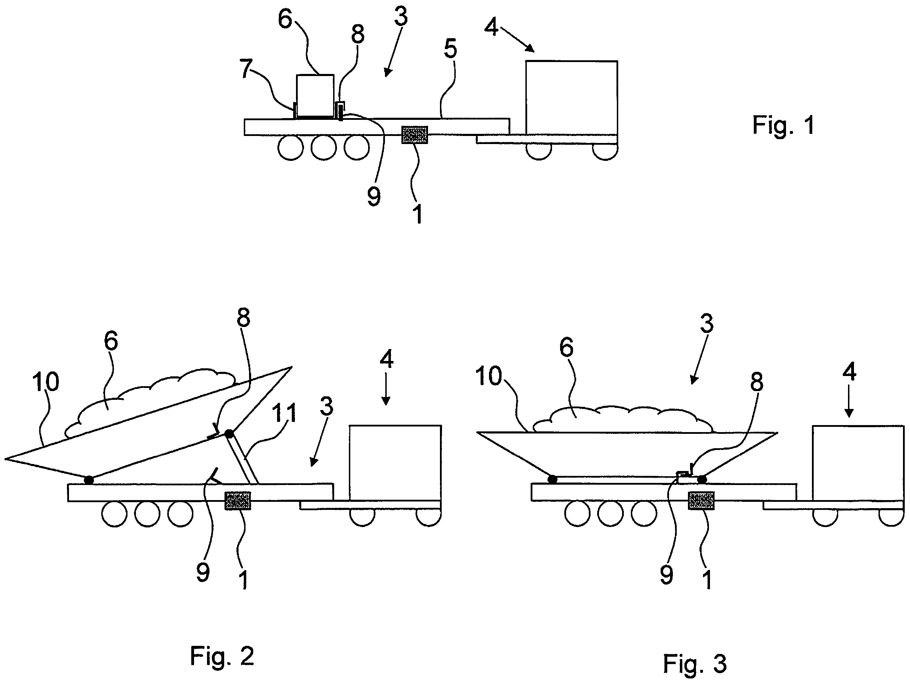

Die Figur 1 zeigt ein Nutzfahrzeug, das eine Zugmaschine 4 und ein Anhängefahrzeug 3 aufweist. Das Anhängefahrzeug 3 kann z. B. als Deichselanhänger oder als Auflieger ausgebildet sein. An dem Anhängefahrzeug 3 ist eine Bremsanlagen-Steuerungseinrichtung 1 angeordnet, z. B. in Form eines Anhänger-EBS-Systems. Als EBS-System wird ein elektronisch gesteuertes Bremssystem bezeichnet, das sich dadurch auszeichnet, dass es die komplette pneumatische Bremsensteuerung in dem Anhängefahrzeug durchführt und insbesondere dafür ausgelegt ist, bei Bedarf selbständig, d.h. auch ohne Anforderung durch eine Bremspedalbetätigung durch den Fahrer, die Bremsen des Anhängefahrzeugs betätigen zu können.

Das Anhängefahrzeug 3 weist außerdem eine Ladefläche 5 auf. Auf der Ladefläche 5 ist ein Rollcontainer 7 angeordnet, in dem eine Ladung 6 angeordnet ist. Der Rollcontainer 7 ist über einen Verriegelungsmechanismus 8, 9 an der Ladefläche 5 fixiert. Der Verriegelungsmechanismus 8, 9 weist ein ladungsträgerseitiges Verriegelungselement 8 und ein anhängefahrzeugseitiges Verriegelungselement 9 auf, die miteinander lösbar verbunden sind.

Die Figuren 2 und 3 zeigen ein Nutzfahrzeug 3, 4, das als Kipper ausgebildet ist. In diesem Fall weist das Anhängefahrzeug 3 keine Ladefläche 5 auf, sondern stattdessen eine Kippmulde 10, die über einen z. B. hydraulisch betätigten Teleskopmechanismus 11 einseitig anhebbar und hierdurch kippbar ist. Die Figur 2 zeigt das Nutzfahrzeug 3, 4 bei angehobener Kippmulde 10, die Figur 3 zeigt das Nutzfahrzeug 3, 4 bei abgesenkter und ordnungsgemäß verriegelter Kippmulde 10. In der Kippmulde 10 ist ebenfalls eine Ladung angeordnet, z. B. in Form von auf einer Baustelle benötigtem Baustoff, z. B. Kies.

Wie erkennbar ist, weist auch das Nutzfahrzeug 3, 4 gemäß den Figuren 2 und 3 einen Verriegelungsmechanismus 8, 9 auf, der ein ladungsträgerseitiges Verriegelungselement 8 und ein anhängefahrzeugseitiges Verriegelungselement 9 aufweist. Das Verriegelungselement 9 ist beispielsweise verschwenkbar ausgebildet und wird zum Lösen der Verriegelung in die in Figur 2 dargestellte geöffnete Position verschwenkt. Bei abgesenkter Kippmulde 10 wird das Verriegelungselement 9 in eine Verriegelungsposition verschwenkt, in der das ladungsträgerseitige Verriegelungselement 8 hintergriffen wird und dadurch die Kippmulde 10 verriegelt ist.

Das ladungsträgerseitige Verriegelungselement 8 ist fest mit dem Ladungsträger 7, 10 verbunden, das anhängefahrzeugseitige Verriegelungselement 9 ist fest mit dem Anhängefahrzeug 3 bzw. dem Nutzfahrzeug verbunden.

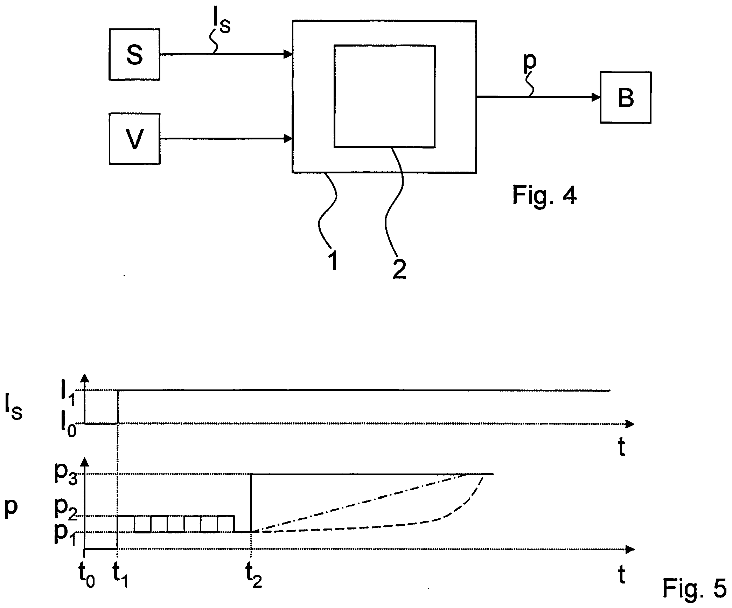

Die Figur 4 zeigt in schematischer Darstellung eine Anhängerbremsanlagen-Steuerungseinrichtung 1, die ein elektronisches Steuergerät 2 aufweist. Das elektronische Steuergerät 2 führt die beschriebenen Funktionen aus. Die nachfolgenden genannten Eingangssignale sind dabei Signaleingängen des elektronischen Steuergeräts 2 zugeführt. Die Steuerungseinrichtung 1 ist, neben den in Figur 4 dargestellten Elementen, noch mit weiteren Komponenten der Bremsanlage verbunden, wie z. B. einem Druckluftvorratsbehälter, einer elektrischen Energieversorgung und ggf. weiteren Sensoren und Bedienelementen. Die Figur 4 zeigt daher nur die für eine Erläuterung der vorliegenden Erfindung anzusprechenden Komponenten.

Der Steuerungseinrichtung 1 sind als Eingangssignale ein Ausgangssignal Iₛ eines Überwachungssensors S und ein Geschwindigkeitssignal eines Geschwindigkeitssensors V zugeführt. Der Geschwindigkeitssensor V kann beispielsweise ein für eine Antiblockierfunktion vorgesehener Raddrehgeschwindigkeitssensor sein. Aus dem Geschwindigkeitssignal ermittelt die Steuerungseinrichtung 1 die Fahrgeschwindigkeit des Nutzfahrzeugs 3, 4. Ausgangsseitig ist die Steuerungseinrichtung 1 mit Bremsen B einer druckluftgesteuerten Bremsanlage des Nutzfahrzeugs 3, 4 verbunden. Die Steuerungseinrichtung 1 erzeugt automatisch einen Bremsdruck p und gibt diesen an die Bremsen B aus.

Der Überwachungssensor V kann entweder direkt über eine elektrische Leitung mit der Steuerungseinrichtung 1 verbunden sein, oder über eine drahtlose Datenübertragungsstrecke oder ein Fahrzeug-Bussystem, wie z. B. einen CAN-Bus. Der Überwachungssensor V kann auch Teil eines anderen Steuergeräts oder einer Steuereinrichtung im Nutzfahrzeug 3, 4 sein.

Die Figur 5 zeigt einen beispielhaften zeitlichen Ablauf bei einer automatischen Betätigung der Bremsen B des Nutzfahrzeugs infolge der Erkennung von nicht ordnungsgemäßer Verriegelung des Ladungsträgers 7, 10. Beginnend bei einem Zeitpunkt t₀ sei zunächst von dem Überwachungssensor S ein Ausgangssignal lₛ ausgegeben, das einen Wert l₀ aufweist, welcher einer ordnungsgemäßen Verriegelung entspricht. Entsprechend wird zu diesem Zeitpunkt ein Bremsdruck von p = 0 ausgegeben. Zu einem Zeitpunkt t₁ gibt der Überwachungssensor S ein Ausgangssignal l_{S} aus, das den Wert l₁ hat, was eine nicht ordnungsgemäße Verriegelung anzeigt, z.B. aufgrund eines Lösens der Verriegelung durch unsachgemäße Bedienung. Hierdurch ausgelöst beginnt die Steuerungseinrichtung 1 ein gepulstes Bremsdrucksignal auszugeben. Hierbei wird der Bremsdruck p zwischen den Werten p₁ und p₂ hin- und her moduliert. p₁ ist beispielsweise 1,2 bar, p₂ beispielsweise 2,5 bar.

Nach einem gewissen Zeitraum wird zu einem Zeitpunkt t₂ der Bremsdruck p automatisch weiter erhöht, und zwar auf einen Wert p₃, der derart gewählt ist, dass das Fahrzeug durch die Betätigung der Bremsen B wesentlich verzögert wird. p₃ kann z. B. einen Wert von 5 oder 6 bar haben. Die Erhöhung des Bremsdrucks p nach dem Zeitpunkt p₂ kann entweder schlagartig erfolgen, wie durch die durchgezogene Linie in Figur 5 dargestellt ist, oder allmählich nach einer Zeitfunktion, wie dies durch die strichpunktierte Linie als etwa lineare Übergangsfunktion oder durch die gestrichelte Linie als progressive Übergangsfunktion dargestellt ist. Der Zeitraum für die Übergangsfunktion, bis der Wert p = p₃ erreicht ist, kann beispielsweise 10 Sekunden betragen.

## Patentansprüche

1. Verfahren zur Steuerung einer druckluftgesteuerten Bremsanlage eines Nutzfahrzeuges (3, 4), wobei durch einen Überwachungssensor (S) überwacht wird, ob die für einen sicheren Fahrzustand des Nutzfahrzeugs (3, 4) vorgesehene Sicherung oder Positionierung eines Fahrzeugteils des Nutzfahrzeugs (3, 4), einer Beladung (6) des Nutzfahrzeugs (3, 4) oder eines eine Beladung (6) des Nutzfahrzeugs (3, 4) aufnehmenden Ladungsträgers (7, 10) vorliegt, und wobei automatisch die Bremsen (B) des Nutzfahrzeuges (3, 4) betätigt werden, wenn durch den Überwachungssensor (S) detektiert wird, dass die für einen sicheren Fahrzustand des Nutzfahrzeugs (3, 4) vorgesehene Sicherung oder Positionierung des Fahrzeugteils, der Beladung (6) oder des Ladungsträgers (7, 10) nicht vorliegt, wobei wenigstens zu Beginn der automatischen Betätigung der Bremsen (B) des Nutzfahrzeuges (3, 4) die Betätigung der Bremsen (B) gepulst erfolgt, derart, dass der Bremsdruck (p) zwischen einem unteren Druckwert (p₁) und einem oberen Druckwert (p₂) hin- und her moduliert wird, wobei das fahrende Nutzfahrzeug (3, 4) nicht oder nur unwesentlich verzögert wird.

2. Verfahren, insbesondere nach Anspruch 1, zur Steuerung einer druckluftgesteuerten Bremsanlage eines Nutzfahrzeuges (3, 4), wobei im Fahrzustand des Nutzfahrzeugs (3, 4) automatisch die Bremsen (B) des Nutzfahrzeuges (3, 4) betätigt werden, **dadurch gekennzeichnet, dass** wenigstens zu Beginn der automatischen Betätigung der Bremsen (B) des Nutzfahrzeuges (3, 4) die Betätigung der Bremsen (B) derart erfolgt, dass diese Betätigung von dem Fahrer des Nutzfahrzeuges (3, 4) als Warnsignal wahrnehmbar ist, aber das fahrende Nutzfahrzeug (3, 4) nicht oder nur unwesentlich verzögert wird.

3. Verfahren nach einem der vorhergehenden Ansprüche, **dadurch gekennzeichnet, dass** bei der automatischen Betätigung der Bremsen (B) des Nutzfahrzeuges (3, 4) während eines ersten Zeitraums (t₁ ... t₂) zu Beginn der automatischen Betätigung der Bremsen (B) das fahrende Nutzfahrzeug (3, 4) durch die automatische Betätigung der Bremsen (B) nicht oder nur unwesentlich verzögert wird und nach Ablauf des ersten Zeitraums (t₁ ... t₂) das fahrende Nutzfahrzeug (3, 4) durch die automatische Betätigung der Bremsen (B) wesentlich verzögert wird.

4. Verfahren nach einem der vorherigen Ansprüche, **dadurch gekennzeichnet, dass** die automatische Betätigung der Bremsen (B), durch die das fahrende Nutzfahrzeug (3, 4) nicht oder nur unwesentlich verzögert wird, bei einer Fahrgeschwindigkeit oberhalb einer ersten Mindestgeschwindigkeit ausgelöst wird.

5. Verfahren nach Anspruch 4, **dadurch gekennzeichnet, dass** die automatische Betätigung der Bremsen (B), durch die das fahrende Nutzfahrzeug (3, 4) wesentlich verzögert wird, bei einer Fahrgeschwindigkeit oberhalb einer zweiten Mindestgeschwindigkeit ausgelöst wird, die größer ist als die erste Mindestgeschwindigkeit

6. Verfahren nach einem der vorhergehenden Ansprüche, **dadurch gekennzeichnet, dass** die automatische Betätigung der Bremsen (B) des Nutzfahrzeuges (3, 4) bei einer Fahrgeschwindigkeit oberhalb einer dritten Mindestgeschwindigkeit unterdrückt wird.

7. Verfahren nach Anspruch 6, **dadurch gekennzeichnet, dass** die dritte Mindestgeschwindigkeit größer ist als die zweite Mindestgeschwindigkeit.

8. Verfahren nach einem der vorhergehenden Ansprüche, **dadurch gekennzeichnet, dass** bei der automatischen Betätigung der Bremsen (B) des Nutzfahrzeuges (3, 4) der Bremsdruck (p) mit einer Übergangsfunktion von einem Anfangswert (p₂) auf einen Endwert (p₃) erhöht wird, wobei der Endwert (p₃) größer ist als der Anfangswert (p₂).

9. Verfahren nach einem der vorhergehenden Ansprüche, **dadurch gekennzeichnet, dass** der Überwachungssensor (S) im oder am Nutzfahrzeug (3, 4) angeordnet ist.

10. Verfahren nach einem der vorhergehenden Ansprüche, **dadurch gekennzeichnet, dass** der Überwachungssensor (S) die für einen sicheren Fahrzustand des Nutzfahrzeugs (3, 4) vorgeschriebene ordnungsgemäße Verriegelung und/oder Positionierung des eine Beladung (6) des Nutzfahrzeugs (3, 4) aufnehmenden Ladungsträgers (7, 10) mit dem Nutzfahrzeug (3, 4) überwacht.

11. System aus einer Bremsanlagen-Steuerungseinrichtung (1) für eine druckluftgesteuerte Bremsanlage eines Nutzfahrzeuges (3, 4) und einem Überwachungssensor (S), der dazu eingerichtet ist zu überwachen, ob die für einen sicheren Fahrzustand des Nutzfahrzeugs (3, 4) vorgesehene Sicherung oder Positionierung eines Fahrzeugteils des Nutzfahrzeugs (3, 4), einer Beladung (6) des Nutzfahrzeugs (3, 4) oder eines eine Beladung (6) des Nutzfahrzeugs (3, 4) aufnehmenden Ladungsträgers (7, 10) vorliegt, wobei die Steuerungseinrichtung (1) ein elektronisches Steuergerät (2) aufweist, das mit einem Signaleingang mit dem Überwachungssensor (S) verbunden ist, und wobei das Steuergerät (2) dazu eingerichtet ist, eine automatische Betätigung der Bremsen (B) des Nutzfahrzeuges (3, 4) zu bewirken, wenn an dem Signaleingang ein Auslösesignal (l₁) von dem Überwachungssensor (S) empfangen wird, das anzeigt, dass die für einen sicheren Fahrzustand des Nutzfahrzeugs (3, 4) vorgesehene Sicherung oder Positionierung des Fahrzeugteils, der Beladung (6) oder des Ladungsträgers (7, 10) nicht vorliegt, wobei das Steuergerät (2) derart eingerichtet ist, dass wenigstens zu Beginn der automatischen Betätigung der Bremsen (B) des Nutzfahrzeuges (3, 4) die Betätigung der Bremsen (B) gepulst erfolgt, derart, dass der Bremsdruck (p) zwischen einem unteren Druckwert (p₁) und einem oberen Druckwert (p₂) hin- und her moduliert wird, wobei das fahrende Nutzfahrzeug (3, 4) nicht oder nur unwesentlich verzögert wird.

12. System nach Anspruch 11, **dadurch gekennzeichnet, dass** der Überwachungssensor (S) als Verriegelungssensor ausgebildet ist, der dazu eingerichtet ist, die für einen sicheren Fahrzustand des Nutzfahrzeugs (3, 4) vorgesehene Verriegelung eines Fahrzeugteils des Nutzfahrzeugs (3, 4), einer Beladung (6) des Nutzfahrzeugs (3, 4) oder eines eine Beladung (6) des Nutzfahrzeugs (3, 4) aufnehmenden Ladungsträgers (7, 10) zu überwachen.

13. Bremsanlagen-Steuerungseinrichtung für ein System nach einem der Ansprüche 11 bis 12, wobei das elektronische Steuergerät (2) der Steuerungseinrichtung (1) dazu eingerichtet ist, die automatische Betätigung der Bremsen (B) des Nutzfahrzeuges (3, 4) zu bewirken.

14. Bremsanlagen-Steuerungseinrichtung nach Anspruch 13, wobei das das elektronische Steuergerät (2) der Steuerungseinrichtung (1) zur Ausführung eines Verfahrens nach einem der Ansprüche 1 bis 10 eingerichtet ist.

15. Steuergerät (2) zur Durchführung des Verfahrens nach einem der Ansprüche 1 bis 10.

## Claims

1. Method for controlling a compressed-air-controlled brake system of a utility vehicle (3, 4), wherein a monitoring sensor (S) monitors whether the securing or positioning of a vehicle part of the utility vehicle (3, 4) of a load (6) of the utility vehicle (3, 4) or of a load carrier (7, 10) which accommodates a load (6) of the utility vehicle (3, 4), provided for the sake of a safe driving state of the utility vehicle (3, 4), has occurred, and wherein the brakes (B) of the utility vehicle (3, 4) are activated automatically if the monitoring sensor (S) detects that the securing or positioning of the vehicle part, of the load (6) or of the load carrier (7, 10), provided for the sake of a safe driving state of the utility vehicle (3, 4), has not occurred, wherein at least at the start of the automatic activation of the brakes (B) of the utility vehicle (3, 4) the brakes (B) are activated in a pulsed fashion such that the brake pressure (p) is modulated to and fro between a lower pressure value (p₁) and an upper pressure value (p₂), wherein the driving utility vehicle (3, 4) is not decelerated or is only decelerated insignificantly.

2. Method, in particular according to Claim 1, for controlling a compressed-air-controlled brake system of a utility vehicle (3, 4), wherein in the driving state of the utility vehicle (3, 4) the brakes (B) of the utility vehicle (3, 4) are activated automatically, **characterized in that** at least at the start of the automatic activation of the brakes (B) of the utility vehicle (3, 4) the activation of the brakes (B) takes place in such a way that this activation can be perceived as a warning signal by the driver of the utility vehicle (3, 4) but the driving utility vehicle (3, 4) is not decelerated or is only decelerated insignificantly.

3. Method according to one of the preceding claims, **characterized in that** in the case of automatic activation of the brakes (B) of the utility vehicle (3, 4) during a first time period (t₁ ... t₂), at the start of the automatic activation of the brakes (B) the driving utility vehicle (3, 4) is not decelerated, or is only decelerated insignificantly, by the automatic activation of the brakes (B), and after the expiry of the first time period (t₁ ... t₂) the driving utility vehicle (3, 4) is decelerated significantly by the automatic activation of the brakes (B).

4. Method according to one of the preceding claims, **characterized in that** the automatic activation of the brakes (B), which does not, or only insignificantly, decelerates the driving utility vehicle (3, 4), is triggered at a velocity above a first minimum velocity.

5. Method according to Claim 4, **characterized in that** the automatic activation of the brakes (B), which significantly decelerates the driving utility vehicle (3, 4), is triggered at a velocity above a second minimum velocity which is higher than the first minimum velocity.

6. Method according to one of the preceding claims, **characterized in that** the automatic activation of the brakes (B) of the utility vehicle (3, 4) is suppressed at a velocity above a third minimum velocity.

7. Method according to Claim 6, **characterized in that** the third minimum velocity is higher than the second minimum velocity.

8. Method according to one of the preceding claims, **characterized in that** in the case of the automatic activation of the brakes (B) of the utility vehicle (3, 4) the brake pressure (p) is increased from an initial value (p₂) to a final value (p₃) with a transition function, wherein the final value (p₃) is higher than the initial value (p₂).

9. Method according to one of the preceding claims, **characterized in that** the monitoring sensor (S) is arranged in or on the utility vehicle (3, 4).

10. Method according to one of the preceding claims, **characterized in that** the monitoring sensor (S) monitors the satisfactory locking and/or positioning of the load carrier (7, 10), which accommodates a load (6) of the utility vehicle (3, 4), prescribed for the sake of a safe driving state of the utility vehicle (3, 4), with respect to the utility vehicle (3, 4).

11. System composed of a brake system control device (1) for a compressed-air-controlled brake system of a utility vehicle (3, 4) and a monitoring sensor (S), which is configured to monitor whether the securing or positioning of a vehicle part of the utility vehicle (3, 4), of a load (6) of the utility vehicle (3, 4) or of a load carrier (7, 10) which accommodates a load (6) of the utility vehicle (3, 4), provided for the sake of a safe driving state of the utility vehicle (3, 4), has occurred, wherein the control device (1) has an electronic control unit (2) which is connected by a signal input to the monitoring sensor (S), and wherein the control unit (2) is configured to bring about automatic activation of the brakes (B) of the utility vehicle (3, 4) if a triggering signal (I₁) is received from the monitoring sensor (S) at the signal input, which triggering signal (I₁) indicates that the securing or positioning of the vehicle part, of the load (6) or of the load carrier (7, 10), provided for the sake of a safe driving state of the utility vehicle (3, 4), has not occurred, wherein the control unit (2) is configured in such a way that, at least at the start of the automatic activation of the brakes (B) of the utility vehicle (3, 4), the brakes (B) are activated in a pulsed fashion such that the brake pressure (p) is modulated to and fro between a lower pressure value (p₁) and an upper pressure value (p₂), wherein the driving utility vehicle (3, 4) is not decelerated or is only decelerated insignificantly.

12. System according to Claim 11, **characterized in that** the monitoring sensor (S) is embodied as a locking sensor which is configured to monitor the locking of a vehicle part of the utility vehicle (3, 4), of a load (6) of the utility vehicle (3, 4) or of a load carrier (7, 10) which accommodates a load (6) of the utility vehicle (3, 4), provided for the sake of a safe driving state of the utility vehicle (3, 4).

13. Brake system control device for a system according to one of Claims 11 to 12, wherein the electronic control unit (2) of the control device (1) is configured to bring about the automatic activation of the brakes (B) of the utility vehicle (3, 4).

14. Brake system control device according to Claim 13, wherein the electronic control unit (2) of the control device (1) is configured to carry out a method according to one of Claims 1 to 10.

15. Control unit (2) for carrying out the method according to one of Claims 1 to 10.

## Revendications

1. Procédé de commande d'un système de freinage à commande pneumatique d'un véhicule utilitaire (3, 4), dans lequel un capteur de contrôle (S) contrôle la présence ou non du moyen de fixation ou de positionnement, prévu pour un état de conduite sécurisé du véhicule utilitaire (3, 4), d'une partie de véhicule du véhicule utilitaire (3, 4), d'un chargement (6) du véhicule utilitaire (3, 4), ou d'un support de chargement (7, 10) recevant un chargement (6) du véhicule utilitaire (3, 4), et dans lequel les freins (B) du véhicule utilitaire (3, 4) sont automatiquement actionnés lorsque le capteur de contrôle (S) détecte l'absence du dispositif de fixation ou de positionnement, prévu pour un état de conduite sûr du véhicule utilitaire (3, 4), du chargement (6) ou du support de chargement (7, 10), dans lequel l'actionnement des freins (B) est effectué de manière pulsée au début de l'actionnement automatique des freins (B) du véhicule utilitaire (3, 4) de manière à ce que la pression de freinage (p) soit modulée par va-et-vient entre une valeur de pression inférieure (p₁) et une valeur de pression supérieure (p₂), dans lequel le véhicule utilitaire (3, 4) se déplaçant n'est pas ralenti ou ne l'est que de manière négligeable.

2. Procédé, notamment selon la revendication 1, destiné à commander un système de freinage pneumatique d'un véhicule utilitaire (3, 4), dans lequel les freins (B) du véhicule utilitaire (3, 4) sont automatiquement actionnés dans l'état de conduite du véhicule utilitaire (3, 4), **caractérisé en ce que** l'actionnement des freins (B) est effectué au moins au début de l'actionnement automatique des freins (B) du véhicule utilitaire (3, 4) de manière à ce que ledit actionnement puisse être perçu sous la forme d'un signal d'alarme par le conducteur du véhicule utilitaire (3, 4), mais que le véhicule utilitaire (3, 4) se déplaçant ne soit pas ralenti ou ne le soit que de manière négligeable.

3. Procédé selon l'une quelconque des revendications précédentes, **caractérisé en ce que**, lors de l'actionnement automatique des freins (B) du véhicule utilitaire (3, 4) pendant un premier intervalle de temps (t₁...t₂), au début de l'actionnement automatique des freins (B), le véhicule utilitaire (3, 4) se déplaçant n'est pas ralenti ou ne l'est que de manière négligeable par l'actionnement automatique des freins (B) et **en ce qu'**après l'écoulement du premier intervalle de temps (t₁...t₂), le véhicule utilitaire (3, 4) se déplaçant est sensiblement ralenti par l'actionnement automatique des freins (B).

4. Procédé selon l'une quelconque des revendications précédentes, **caractérisé en ce que** l'actionnement automatique des freins (B) par lequel le véhicule utilitaire (3, 4) se déplaçant n'est pas ralenti ou ne l'est que de manière négligeable, est déclenché à une vitesse de conduite qui est supérieure à une première vitesse minimale.

5. Procédé selon la revendication 4, **caractérisé en ce que** l'actionnement automatique des freins (B) par lequel le véhicule utilitaire (3, 4) se déplaçant est sensiblement ralenti, est déclenché lorsque la vitesse de conduite est supérieure à une deuxième vitesse minimale qui est supérieure à la première vitesse minimale.

6. Procédé selon l'une quelconque des revendications précédentes, **caractérisé en ce que** l'actionnement automatique des freins (B) du véhicule utilitaire (3, 4) est inhibé lorsque la vitesse de conduite est supérieure à une troisième vitesse minimale.

7. Procédé selon la revendication 6, **caractérisé en ce que** la troisième vitesse minimale est supérieure à la deuxième vitesse minimale.

8. Procédé selon l'une quelconque des revendications précédentes, **caractérisé en ce que**, lors de l'actionnement automatique des freins (B) du véhicule utilitaire (3, 4), la pression de freinage (p) est augmentée conformément à une fonction de transition d'une valeur initiale (p₂) à une valeur finale (p₃), dans lequel la valeur finale (p₃) est supérieure à la valeur initiale (p₂).

9. Procédé selon l'une quelconque des revendications précédentes, **caractérisé en ce que** le capteur de contrôle (S) est disposé dans ou sur le véhicule utilitaire (3, 4).

10. Procédé selon l'une quelconque des revendications précédentes, **caractérisé en ce que** le capteur de contrôle (S) contrôle de verrouillage et/ou le positionnement prescrit pour un état de conduite sûr du véhicule utilitaire (3, 4), du support de chargement (7, 10) recevant un chargement (6) du véhicule utilitaire (3, 4) avec le véhicule utilitaire (3, 4).

11. Système constitué d'un dispositif de commande d'un système de freinage (1) destiné à un système de freinage pneumatique d'un véhicule utilitaire (3, 4) et d'un capteur de contrôle (S) qui est conçu pour contrôler la présence ou non du moyen de fixation ou de positionnement, prévu pour un état de conduite sûr du véhicule utilitaire (3, 4), d'une partie de véhicule du véhicule utilitaire (3, 4), d'un chargement (6) du véhicule utilitaire (3, 4), ou d'un support de chargement (7, 10) recevant un chargement (6) du véhicule utilitaire (3, 4), dans lequel le dispositif de commande (1) comporte un appareil de commande électronique (2) qui est relié au capteur de contrôle (S) par une entrée de signal, et dans lequel l'appareil de commande (2) est conçu pour provoquer un actionnement automatique des freins (B) du véhicule utilitaire (3, 4) lorsqu'un signal de déclenchement (I₁) est reçu par le capteur de contrôle (S) sur l'entrée de signal, lequel signal de déclenchement indique l'absence du dispositif de fixation ou de positionnement, prévu pour un état de conduite sûr du véhicule utilitaire (3, 4), de la partie de véhicule, du chargement (6) ou du support de chargement (7, 10), dans lequel l'appareil de commande (2) est conçu pour que l'actionnement des freins (B) soit effectué de manière pulsée, au moins au début de l'actionnement automatique des freins (B) du véhicule utilitaire (3, 4), de manière à ce que la pression de freinage (p) soit modulée par va-et-vient entre une valeur de pression inférieure (p₁) et une valeur de pression supérieure (p₂), dans lequel le véhicule utilitaire (3, 4) se déplaçant n'est pas ralenti ou ne l'est que de manière négligeable.

12. Système selon la revendication 11, **caractérisé en ce que** le capteur de contrôle (S) est réalisé sous la forme d'un capteur de verrouillage qui est conçu pour contrôler le verrouillage, prévu pour un état de conduite sûr du véhicule utilitaire (3, 4), d'une partie de véhicule du véhicule utilitaire (3, 4), d'un chargement (6) du véhicule utilitaire (3, 4) ou d'un support de chargement (7, 10) recevant un chargement (6) du véhicule utilitaire (3, 4).

13. Dispositif de commande de système de freinage destiné à un système selon l'une quelconque des revendications 11 et 12, dans lequel l'appareil de commande électronique (2) du dispositif de commande (1) est conçu pour provoquer l'actionnement automatique des freins (B) du véhicule utilitaire (3, 4).

14. Dispositif de commande de système de freinage selon la revendication 13, dans lequel l'appareil de commande électronique (2) du dispositif de commande (1) est conçu pour mettre en oeuvre un procédé selon l'une quelconque des revendications 1 à 10.

15. Appareil de commande (2) destiné à mettre en oeuvre le procédé selon l'une quelconque des revendications 1 à 10.
